# EUROPEAN PATENT SPECIFICATION

(11) **EP 2 874 094 B1**
(45) Date of publication and mention of the grant of the patent: **06.04.2016**
(21) Application number: 14193053.7
(22) Date of filing: 13.11.2014
(51) Int. Cl.: G06F 21/64, G06Q 20/02, H04L 9/32, H04L 29/06, H04N 1/32

(54) **Data authorization method**
Datenautorisierungsverfahren
Procédé d'autorisation de données

(30) Priority: 14.11.2013 CZ 20130883
(43) Date of publication of application: 20.05.2015
(73) Proprietor: Software602 a.s., 14000 Praha 4 (CZ)
(72) Inventor: Kaucky, Richard, 14900 Praha 4 - Seberov (CZ)
(74) Representative: Hartvichova, Katerina

(56) References cited:
- EP-A2- 1 411 430
- WO-A2-02/48848
- Menezes, Vanstone, Oorschot: "Chapter 9: HANDBOOK OF APPLIED CRYPTOGRAPHY", [Online] 1 October 1996 (1996-10-01), CRC PRESS LLC, USA, XP001525009, ISBN: 978-0-8493-8523-0 pages 321-383, Retrieved from the Internet: URL:http://www.cacr.math.uwaterloo.ca/hac/ > * the whole document *

## Description

### Field of Art

The present invention relates to a method of authorizing data by a digital signature certificate using two devices paired by Bluetooth technology, with an increased level of security.

### Background Art

Digital signature (digital signature certificate) is commonly used for authorizing data. The digital signature certificate is stored either on the device (computer, mobile phone, tablet, etc.) that contains the signing application, or on a data medium connected to the device.
In the field of mobile devices, there is not yet a technology that would allow separation of a digital certificate store from the environment in which the authorization itself takes place, or to provide this external store with additional security elements (e.g. as stipulated by US standard FIPS 140).

The document WO02/48848 discloses a method for delegating signatures to a signature server. The method includes receiving a request for a digital signature from a user device at the signature server; wherein the request includes an item to be signed on behalf of the user by the signature server. In response to the request, the system looks up a private key for the user at the signature server, and signs the item with the private key. Then, the system returns the signed item to the user device. The system authenticates the user prior to signing the item.

### Disclosure of the Invention

The present invention provides a method for authorizing data by a digital signature certificate that allows using another, separate device as a digital certificate store, completely separated from the authorizing application, and therefore overcomes the disadvantages of the current state of the art.

The subject of the invention is a method of authorizing data by a digital signature certificate using a first device (Master), which executes the data authorization process itself and on which the authorizing application is stored, and a second device (Slave), on which the digital signature certificate is stored, while both devices are connected using Bluetooth technology and in every data authorization transaction the devices exchange a hash of a string created by joining a first string generated by the first device and a second string generated by the second device, whereas at least one of the generated strings has been generated in the previous authorization transaction between the two devices or upon the first connection between the two devices, and whereas the first generated string is, in the course of the transaction in which it has been generated, passed to the second device and the second generated string is, in the course of the transaction in which it has been generated, passed to the first device.

Preferably, the PIN (personal identification number) entered by the user into the first device is then verified as follows: the first device sends to the second device a hash of a string created by joining the entered PIN and the first and the second generated string, and the second device verifies the entered PIN based on this hash and the knowledge of both generated strings. The PIN in this case is the PIN to the digital signature certificate stored in the second device.

The first device is preferably a personal computer, a laptop, a tablet or a smartphone capable of communication by Bluetooth. It contains an autorizing (controlling, signing) application that enables the user to sign.

The second device is preferably a tablet, a smartphone, a "Gear" watch (a watch with a processor and memory) or a special device with a processor and memory to be used as a second device, capable of communication by Bluetooth. It contains an application that serves as a secure digital certificate store, and executes data signing as required by the authorizing application stored on the first device.

In a preferred embodiment, the subject of the invention is a method of authorizing data by a digital signature certificate using a first device (Master), which executes the data authorization process itself and on which the authorizing application is stored, and a second device (Slave), on which the digital signature certificate is stored, while:
- in the first contact, the first and the second device connect using Bluetooth technology, subsequently the second device passes to the first device its Bluetooth Device Address, the public part of the digital signature certificate and its serial number (ID), then the first device generates a random string as a signature ticket for the first authorization transaction and passes to the second device its Bluetooth Device Address and the signature ticket for the first authorization transaction (i.e. the first generated string), subsequently the first device stores the received information regarding the second device, i.e. the Bluetooth Device Address, the public part of the digital signature certificate, its ID and the signature ticket for the first authorization transaction into a store, preferably into an encrypted store, and the second device stores the signature ticket for the first authorization transaction in its memory,
- in each data authorization the first device prompts the user to enter the digital signature certificate PIN, the first and second device connect using Bluetooth technology, subsequently the second device on the first device's request generates a random Transaction string (i.e. the second generated string) and sends to the first device this Transaction string and the hash of a string created by joining the Transaction string and the signature ticket for the authorization transaction, the first device subsequently creates a hash of a string created by joining the Transaction string and the signature ticket for the authorization transaction and verifies the hash received from the second device by comparing the two hashes, subsequently the first device sends to the second device a hash of a string created by joining the entered PIN, the Transaction string and the signature ticket for the authorization transaction, then the second device verifies this hash by comparing the hash with a hash created by the second device by joining the PIN, the Transaction string and the signature ticket for the authorization transaction, and if both hashes match, the second device authorizes (signs) the data and sends the signature to the first device, the first device then verifies the received signature using the public part of the digital certificate and then generates a signature ticket (i.e. the first generated string) for the next transaction, sends it to the second device and the first device stores the signature ticket for the next authorization transaction in its store, preferably in an encrypted store, and the second device stores the signature ticket for the next authorization transaction in its memory.

The signature ticket is a randomly generated string, which is created by the first device always at the end of an authorization transaction and passed to the second device. The signature ticket for the first transaction is generated by the first device and passed to the second device during the first contact (initialization). The second device always stores the signature ticket in its memory and uses it in the next authorization transaction. Upon request for signing at the beginning of each transaction, the second device passes to the first device a randomly generated Transaction string and a hash calculated from a string created by joining the Transaction string and the signature ticket for the given transaction (i.e. passed at the end of the previous transaction). The first device verifies the hash and thus ensures that it communicates with the paired second device - therefore it does not just rely on BB_ADDR, Bluetooth Device Address match. The first device subsequently passes to the second device the calculated hash of the string created by joining the PIN, signature ticket and random Transaction string. The second device calculates from the stored PIN, stored signature ticket and Transaction string its own hash and compares it to the received hash. A match of the hashes verifies that the second device received the request for signing from the paired first device and at the same time verifies that the user knows the right PIN for accessing the digital certificate.

The first device can use the stored public key for the digital certificate to verify that the returned signature is based on the requested digital certificate.

The invention is further explained using the attached drawings and example, which however should not be construed as limiting the scope of the invention.

### Brief Description of Drawings

Figure 1 displays the first contact phase using the procedure described in the example.
Figure 2 displays the first authorization transaction.
Figure 3 displays the final phase of the first authorization transaction.

### Example of carrying out the Invention

In this example, the first device M is a laptop, the second device S is a smartphone. Both devices M, S are equipped with Bluetooth technology. On the first device M, an authorization application is stored and on the second device S, a digital signature certificate is stored.

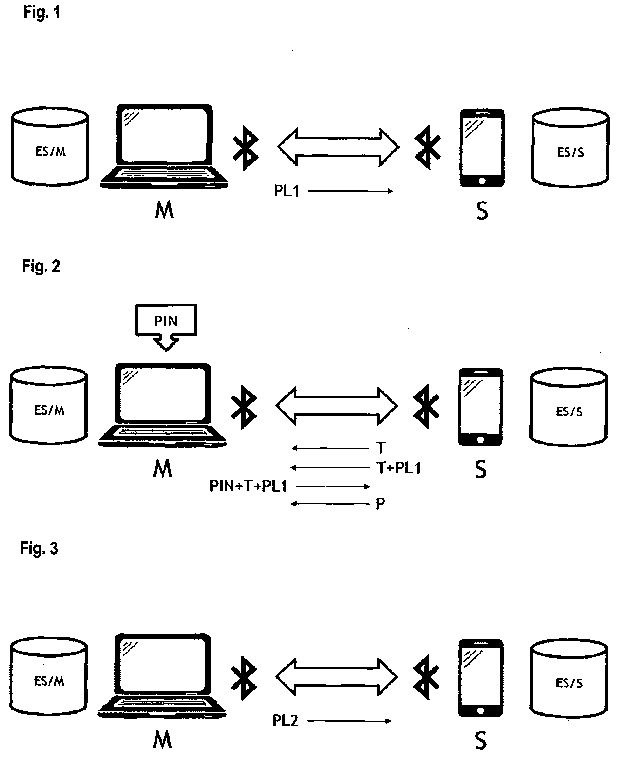

Figure 1 describes the first contact phase. In the first contact, the first device M and the second device S connect using Bluetooth technology, subsequently the second device S passes to the first device M its Bluetooth Device Address, the public part of the digital signature certificate and its ID. The first device M then generates a random string as a signature ticket PL1 for the first authorization transaction and passes to the second device S its Bluetooth Device Address and the signature ticket PL1 for the first authorization transaction. Subsequently the first device M stores the received information regarding the second device S, i.e. the Bluetooth Device Address, the public part of the digital signature certificate and its ID, and the signature ticket PL1 for the first authorization transaction, in an encrypted store ES/M. The second device S stores the signature ticket PL1 for the first authorization transaction in its memory ES/S.

Figure 2 - in the first authorization transaction, the first device M prompts the user to enter the digital signature certificate PIN. Then the first device M and the second device S connect using Bluetooth technology. Subsequently the second device S upon a request from the first device M generates a random Transaction string T and sends to the first device M this Transaction string T and a hash T+PL1 of a string created by joining the Transaction string T and the signature ticket PL1 for the first authorization transaction. The first device M creates a hash of a string created by joining the Transaction string T and the signature ticket PL1 for the first authorization transaction and verifies the hash T+PL1 received from the second device S by comparing the two hashes. This way the first device M verifies that it truly communicates with the paired second device S. Subsequently the first device M sends to the second device S a hash PIN+T+PL1 of a string created by joining the entered PIN, the Transaction string T and the signature ticket PL1 for the first authorization transaction, and after that the second device S verifies the hash by comparing this hash with the hash that the second device S creates by joining the PIN, the Transaction string T and the signature ticket PL1 for the first authorization transaction, and if both hashes match, the second device S authorizes (signs) the data and sends the signature P to the first device M. The first device M then verifies the received signature P using the public part of the digital certificate, then generates a signature ticket PL2 (Figure 3) for the next transaction, sends it to the second device S, and the first device M stores the signature ticket PL2 for the next authorization transaction in an encrypted store ES/M, and the second device S stores the signature ticket PL2 for the next authorization transaction in its memory ES/S.

## Claims

1. A method for authorizing data by a digital signature certificate, wherein a first device (M) is used, which executes the data authorization process and on which the authorizing application is stored, and a second device (S) is used, on which the digital signature certificate is stored, **characterized in that** the devices (M, S) are connected using Bluetooth technology, and in every data authorization transaction the devices (M, S) exchange a hash of a string created by joining a first string (PL1) generated by the first device (M) and a second string (T) generated by the second device (S), while at least one of the generated strings (PL1, T) has been generated in the previous authorization transaction between the two devices (M, S) or in the first contact between the two devices (M, S); and whereas the first generated string (PL1) is, in the course of the transaction in which it has been generated, passed to the second device (S) and the second generated string (T) is, in the course of the transaction in which it has been generated, passed to the first device (M).

2. The method according to claim 1, **characterized in that** the first device (M) sends to the second device (S) a hash of a string created by joining PIN entered by a user and the first (PL1) and second (T) generated string, and the second device (S) verifies the entered PIN based on the hash and the knowledge of both generated strings (PL1, T).

3. The method according to claim 1 or 2, **characterized in that**:
- in the first contact, the first device (M) and the second device (S) are connected using Bluetooth technology, subsequently the second device (S) passes to the first device (M) its Bluetooth Device Address, the public part of the digital signature certificate and its ID, then the first device (M) generates the first random string (PL1) as the signature ticket for the first authorization transaction and passes to the second device its Bluetooth Device Address and the signature ticket (PL1) for the first authorization transaction, then the first device (M) stores the received information regarding the second device (S), i.e. the Bluetooth Device Address, the public part of the digital signature certificate and its ID and the signature ticket (PL1) for the first authorization transaction, in its store (ES/M), preferably in an encrypted store, and the second device (S) stores the signature ticket (PL1) for the first authorization transaction in its memory (ES/S),
- in each authorization the first device (M) prompts the user to enter the PIN to the digital signature certificate, the first device (M) and the second device (S) connect using Bluetooth technology, subsequently the second device (S) upon request from the first device (M) generates a random Transaction string (T) and sends to the first device (M) this Transaction string (T) and the hash (T+PL1) of a string created by joining the Transaction string (T) and the signature ticket (PL1) for the authorization transaction, the first device (M) subsequently creates a hash of a string created by joining the Transaction string (T) and the signature ticket (PL1) for the authorization transaction and verifies the hash received from the second device (S) by comparing the two hashes, subsequently the first device (M) sends to the second device (S) the hash (PIN+T+PL1) of the string created by joining the entered PIN, the Transaction string (T) and the signature ticket (PL1) for the authorization transaction, then the second device (S) verifies this hash by comparing this hash (PIN+T+PL1) with the hash that the second device (S) creates by joining the PIN, the Transaction string (T) and the signature ticket (PL1) for the authorization transaction, and if the two hashes match, the second device (S) signs the data and sends the signature (P) to the first device (M), the first device (M) then verifies the received signature (P) using the public part of the digital certificate, then generates a signature ticket (PL2) for the next transaction, sends it to the second device (S), and the first device (M) stores the signature ticket (PL2) for the next authorization transaction in a store (ES/M), preferably in an encrypted store, and the second device (S) stores the signature ticket (PL2) for the next authorization transaction in its memory (ES/S).

4. The method according to any one of the preceding claims, **characterized in that** the first device (M) is a personal computer, a laptop, a tablet or a smartphone, capable of communication using Bluetooth.

5. The method according to any one of the preceding claims, **characterized in that** the second device (S) is a tablet, a smartphone, a watch with a processor and a memory, or another device with a processor and a memory, capable of communication using Bluetooth.

## Patentansprüche

1. Verfahren zur Autorisierung von Daten mit Hilfe einer zertifikatbasierte digitale Signatur, wobei eine erste Einrichtung (M), die den eigentlichen Prozess der Datenautorisierung, durchführt und worauf die Autorisierungsanwendung geladen ist, und eine zweite Einrichtung (S) zum Einsatz kommen, worauf die zertifikatbasierte digitale Signatur gespeichert ist, **dadurch gekennzeichnet, dass** die Einrichtungen (M, S) durch die Bluetooth-Technologie verbunden werden und dass bei jeder Transaktion der Datenautorisierung zwischen den Einrichtungen (M, S) ein Abdruck einer Zeichenkette gebildet durch die Verbindung der ersten, durch die erste Einrichtung (M) generierten Zeichenkette (PL1) und der zweiten, durch die zweite Einrichtung (S) generierten Zeichenkette (T) übergeben wird, wobei mindestens eine der generierten Zeichenketten (PL1, T) in der vorhergehenden Autorisierungstransaktion zwischen den beiden Einrichtungen (M, S), oder beim Erstkontakt zwischen den beiden Einrichtungen (M, S) generiert worden ist; und wobei die erste generierte Zeichenkette (PL1) im Rahmen der Transaktion, in der sie generiert worden ist, an die zweite Einrichtung (S) und die zweite generierte Zeichenkette (T) im Rahmen der Transaktion, in der sie generiert worden ist, an die erste Einrichtung (M) übergeben wird.

2. Verfahren nach dem Anspruch 1, **dadurch gekennzeichnet, dass** die erste Einrichtung (M) an die zweite Einrichtung (S) einen Abdruck einer Zeichenkette gebildet durch die Verbindung der durch den Anwender eingegebenen PIN und der ersten (PL1) und der zweiten generierten Zeichenkette (T) sendet und die zweite Einrichtung (S) aufgrund dieses Abdrucks und der Kenntnis der beiden generierten Zeichenketten (PL1, T) die eingegebene PIN prüft.

3. Verfahren nach dem Anspruch 1 oder 2, **dadurch gekennzeichnet, dass**:
- beim Erstkontakt die erste Einrichtung (M) und die zweite Einrichtung (S) mit Hilfe der Bluetooth-Technologie verbunden werden, nachfolgend die zweite Einrichtung (S) der ersten Einrichtung (M) ihre Bluetooth-Adresse der Einrichtung, den öffentlichen Teil der zertifikatbasierter digitaler Signatur sowie seine Seriennummer übergibt, worauf die erste Einrichtung (M) die erste zufallsmässige Zeichenkette (PL1) als Unterschriftskarte für die erste Autorisierungstransaktion generiert und an die zweite Einrichtung ihre Bluetooth-Adresse der Einrichtung und die Unterschriftskarte (PL1) für die erste Autorisierungstransaktion übergibt, nachfolgend die erste Einrichtung (M) die erhaltenen Informationen über die zweite Einrichtung (S), d. h. die Bluetooth-Adresse der Einrichtung, den öffentlichen Teil der zertifikatbasierter digitaler Signatur sowie seine Seriennummer und die Unterschriftskarte (PL1) für die erste Autorisierungstransaktion, in ihre Speicherstelle (ES/M) speichert, vorzugsweise in eine chiffrierte Speicherstelle, und die zweite Einrichtung (S) die Unterschriftskarte (PL1) für die erste Autorisierungstransaktion in ihren Speicher (ES/S) speichert,
- bei jeder Datenautorisierung die erste Einrichtung (M) den Anwender zur PIN-Eingabe zur zertifikatbasierter digitaler Signatur auffordert, die erste Einrichtung (M) und die zweite Einrichtung (S) mit Hilfe der Bluetooth-Technologie verbunden werden, nachfolgend die zweite Einrichtung (S) auf Aufforderung der ersten Einrichtung (M) eine zufallsmässige Zeichenkette Transaktion (T) generiert und an die erste Einrichtung (M) diese Zeichenkette Transaktion (T) und den Abdruck der Zeichenkette (T+PL1) gebildet durch die Verbindung der Zeichenkette Transaktion (T) und der Unterschriftskarte (PL1) für die Autorisierungstransaktion sendet, die erste Einrichtung (M) nachfolgend einen Abdruck der Zeichenkette gebildet durch die Verbindung der Zeichenkette Transaktion (T) und der Unterschriftskarte (PL1) für die Autorisierungstransaktion bildet und den von der zweiten Einrichtung (S) erhaltenen Abdruck durch den Vergleich der beiden Abdrücke prüft, nachfolgend die erste Einrichtung (M) an die zweite Einrichtung (S) einen Abdruck (PIN+T+PL1) der Zeichenkette gebildet durch die Verbindung der eingegebenen PIN, der Zeichenkette Transaktion (T) und der Unterschriftskarte (PL1) für die Autorisierungstransaktion sendet, worauf die zweite Einrichtung (S) diesen Abdruck durch den Vergleich dieses Abdruckes (PIN+T+PL1) mit dem Abdruck prüft, den die zweite Einrichtung (S) durch die Verbindung der PIN, der Zeichenkette Transaktion (T) und der Unterschriftskarte (PL1) für die Autorisierungstransaktion bildet, und dass im Falle der Übereinstimmung der beiden Abdrücke die zweite Einrichtung (S) die Daten unterzeichnet und die Unterschrift (P) an die erste Einrichtung (M) sendet, die erste Einrichtung (M) dann die erhaltene Signatur (P) mit Hilfe des öffentlichen Teils des Zertifikats prüft, danach die Unterschriftskarte (PL2) für die nächste Transaktion generiert, diese an die zweite Einrichtung (S) sendet und die erste Einrichtung (M) die Unterschriftskarte (PL2) für die nächste Autorisierungstransaktion in eine Speicherstelle (ES/M) speichert, vorzugsweise in eine chiffrierte Speicherstelle, und die zweite Einrichtung (S) die Unterschriftskarte (PL2) für die nächste Autorisierungstransaktion in ihren Speicher (ES/S) speichert.

4. Verfahren nach einem der vorherigen Ansprüche, **dadurch gekennzeichnet, dass** die erste Einrichtung (M) ein Personalcomputer, Notebook, Tablet oder Smartphone mit Funktion zur Bluetooth-Kommunikation ist.

5. Verfahren nach einem der vorherigen Ansprüche, **dadurch gekennzeichnet, dass** die zweite Einrichtung (S) ein Tablet, Smartphone, eine Uhr mit Prozessor und Speicher oder eine andere Einrichtung mit Prozessor und Speicher mit Funktion zur Bluetooth-Kommunikation ist.

## Revendications

1. Procédé d'autorisation de données à l'aide d'un certificat de signature électronique, dans lequel on utilisera un premier dispositif (M), lequel effectue le procédé d'autorisation de données et sur lequel l'application d'autorisation est sauvegardée, et un deuxième dispositif (S), sur lequel est sauvegardé le certificat de signature électronique, **caractérisé en ce que** les dispositifs (M, S) se connectent à l'aide de la technologie Bluetooth et à chaque opération d'autorisation de données les dispositifs (M, S) échangent une empreinte de la chaîne de caractères créée par la fusion de la première chaîne de caractères (PL1) générée par le premier dispositif (M) et de la seconde chaîne de caractères (T) générée par le second dispositif (S), dans lequel au moins l'une des chaînes de caractères générées (PL1, T) étant générée dans la transaction d'autorisation précédente entre les deux dispositifs (M, S), ou lors du premier contact entre les deux dispositifs (M, S) ; la première chaîne de caractères (PL1) générée étant transmise dans le cadre de la transaction, dans laquelle elle a été générée, au second dispositif (S) et la seconde chaîne de caractères (T) générée étant transmise dans le cadre de la transaction, dans laquelle elle a été générée, au premier dispositif (M).

2. Procédé selon la revendication 1, **caractérisé en ce que** le premier dispositif (M) envoie au second dispositif (S) une empreinte de la chaîne de caractères créée par la fusion du NIP saisi par l'utilisateur et des première (PL1) et seconde chaînes de caractères (T) générées et le second dispositif (S) vérifie le NIP saisi à base de cette empreinte et de la connaissance des deux chaînes de caractères (PL1, T) générées.

3. Procédé selon la revendication 1 ou 2, **caractérisé en ce que** :
- au premier contact, le premier dispositif (M) et le second dispositif (S) se connectent à l'aide de la technologie Bluetooth, puis conséquemment le second dispositif (S) transmet au premier dispositif (M) son adresse Bluetooth du dispositif, la partie publique du certificat de signature électronique et son numéro de série, puis le premier dispositif (M) génère une première chaîne de caractères aléatoire (PL1) en tant que fiche de signature pour la première transaction d'autorisation et transmet son adresse Bluetooth du dispositif et la fiche de signature (PL1) pour la première transaction d'autorisation au second dispositif, puis le premier dispositif (M) sauvegarde les informations reçues relatives au second dispositif (S), c'est-à-dire l'adresse Bluetooth du dispositif, la partie publique du certificat de signature et son numéro de série et la fiche de signature (PL1) pour la première transaction d'autorisation, dans un référentiel (ES/M), de préférence un référentiel crypté, et le second dispositif (S) sauvegarde la fiche de signature (PL1) pour la première transaction d'autorisation dans sa mémoire (ES/S),
- lors de chaque autorisation de données, le premier dispositif (M) appelle l'utilisateur à renseigner le NIP pour le certificat de signature électronique, le premier dispositif (M) et le second dispositif (S) se connectent à l'aide de la technologie Bluetooth, puis consécutivement le second dispositif (S), sur requête du premier dispositif (M), génère une chaîne de caractères aléatoire de la Transaction (T) et envoie au premier dispositif (M) cette chaîne de caractères de la Transaction (T) avec l'empreinte (T+PL1) de la chaîne de caractères créée par la fusion de la chaîne de caractères de la Transaction (T) et de la fiche de signature (PL1) pour la transaction d'autorisation, le premier dispositif (M) crée consécutivement une empreinte de la chaîne de caractères créée par la fusion de la chaîne de caractères de la Transaction (T) et de la fiche de signature (PL1) pour la transaction d'autorisation et il vérifie l'empreinte reçue de la part du second dispositif (S) par comparaison des deux empreintes, puis le premier dispositif (M) envoie au second dispositif (S) une empreinte (NIP+T+PL1) de la chaîne de caractères créée par la fusion du NIP renseigné, de la chaîne de caractères de la Transaction (T) et de la fiche de signature (PL1) pour la transaction d'autorisation, après quoi le second dispositif (S) vérifie cette empreinte par comparaison de cette empreinte (NIP+T+PL1) avec l'empreinte créée par le second dispositif (S) par la fusion du NIP, de la chaîne de caractères de la Transaction (T) et de la fiche de signature (PL1) pour la transaction d'autorisation et, en cas de concordance des deux empreintes, le second dispositif (S) signe les données et envoie la signature (P) au premier dispositif (M), puis le premier dispositif (M) vérifie la signature (P) reçue à l'aide de la partie publique du certificat et génère consécutivement une fiche de signature (PL2) pour une nouvelle transaction, il l'envoie au second dispositif (S) et le premier dispositif (M) sauvegarde la fiche de signature (PL2) pour une nouvelle transaction d'autorisation au référentiel (ES/M), de préférence un référentiel crypté, et le second dispositif (S) sauvegarde la fiche de signature (PL2) pour une nouvelle transaction d'autorisation dans sa mémoire (ES/S).

4. Procédé selon l'une quelconque des revendications précédentes, **caractérisé en ce que** le premier dispositif (M) est un ordinateur personnel, un ordinateur portable, une tablette ou un smartphone avec fonction permettant de communiquer par Bluetooth.

5. Procédé selon l'une quelconque des revendications précédentes, **caractérisé en ce que** le second dispositif (S) est une tablette, un smartphone, une montre avec processeur et mémoire, ou un autre dispositif à processeur et mémoire avec fonction permettant de communiquer par Bluetooth.
